# EUROPÄISCHE PATENTSCHRIFT

(11) **EP 3 378 686 B1**
(45) Veröffentlichungstag und Bekanntmachung des Hinweises auf die Patenterteilung: **10.04.2024**
(21) Anmeldenummer: 18160370.5
(22) Anmeldetag: 07.03.2018
(51) Int. Cl.: B60H 1/34, F24F 13/065

(54) **LUFTAUSSTRÖMER**
AIR VENT
DISPOSITIF D'ÉCOULEMENT D'AIR

(30) Priorität: 23.03.2017 DE 102017106275
(43) Veröffentlichungstag der Anmeldung: 26.09.2018
(73) Patentinhaber: Dr. Schneider Kunststoffwerke GmbH, 96317 Kronach-Neuses (DE)
(72) Erfinder: Uhlenbusch, Olaf, 96275 Marktzeuln Bayern (DE); Schneider, Michael, 96264 Altenkunstadt (DE)
(74) Vertreter: Isarpatent

(56) Entgegenhaltungen:
- EP-A2- 1 331 116
- DE-B3-102013 210 053
- JP-A- 2016 210 396

## Beschreibung

Die vorliegende Erfindung betrifft einen Luftausströmer, der eine Ablenkeinrichtung und ein Luftleitelement aufweist. Das Luftleitelement erstreckt sich mittig in einem Luftkanal und dient zur Ablenkung der Luft in einer ersten Richtung. Über die Ablenkeinrichtung kann die Luft zusätzlich orthogonal zur ersten Richtung umgelenkt werden.

Luftausströmer zur Luftablenkung sind in verschiedenen Formen für verschiedene Einsatzgebiete bekannt. Luftausströmer in Kraftfahrzeugen weisen oftmals zwei Gruppen von Lamellen auf, die orthogonal zueinander verschwenkt werden können, um die Luft entsprechend abzulenken. Ferner sind sogenannte Fugenausströmer bekannt, die eine größere Breite als Höhe aufweisen. Bei diesen Fugenausströmern ist oftmals ein Luftleitelement vorgesehen, das sich über die gesamte Breite erstreckt. Die Ablenkeinrichtung zur weiteren Luftablenkung befindet sich dabei in der Regel in Blickrichtung auf den Luftausströmer hinter dem Luftleitelement bzw. in Luftströmungsrichtung vor diesem. Die Ablenkeinrichtung wird in den meisten Fällen durch eine Vielzahl von parallel verschwenkbar gelagerten Lamellen gebildet.

Nachteilig bei solchen zurückgelagerten Lamellen ist, dass die Luftablenkung über diese begrenzt ist. Insbesondere bei Fugenausströmern mit einer geringen Höhe kann daher keine Luftablenkung erreicht werden, wie dies beispielsweise mit deutlich längeren Lamellen bei konventionellen Luftausströmern möglich ist.

DE 10 2013 210 053 B3 offenbart einen Luftausströmer mit einem starr angeordneten Luftleitelement, das einen im Wesentlichen bauchigen Querschnitt aufweist. Zwischen dem Luftleitelement und gegenüberliegenden Gehäusewänden sind gewölbte Luftleitflächen angeordnet, wobei an den einer Ausströmöffnung des Luftausströmers abgewandten Kanten der Luftleitflächen Flügel zur Luftzufuhr verschwenkbar gelagert sind.

JP 2016 210396 A offenbart einen Luftausströmer mit einem Gehäuse, in dem ein Luftleitelement drehbar gelagert ist, wobei das Luftleitelement eine drehbar gelagerte Welle, eine sich entlang der Welle erstreckende Ablenkplatte und eine Vielzahl von scheibenförmigen Lamellen aufweist, die geneigt an der Welle und der Ablenkplatte angeordnet sind.

EP 1 331 116 A2 offenbart eine Luftdüse mit zwei Wandelementen, die aufeinander zuweisend angeordnet sind, und einem Leitelement, welches verschwenkbar gelagert ist, um einströmende Luft auf die gekrümmten Wandelemente zu leiten und die Luftablenkung zu regeln.

Demgegenüber besteht die Aufgabe der vorliegenden Erfindung darin, einen Luftausströmer mit einer Ablenkeinrichtung und einem Luftleitelement anzugeben, wobei der Luftausströmer vorzugsweise als sogenannter Fugenausströmer ausgebildet ist und dabei eine geringe Höhe im Vergleich zu seiner Breit aufweist, welcher die Nachteile des Stands der Technik behebt und eine verbesserte Luftablenkung über Lamellen erreicht. Die Luftablenkung über das Luftleitelement soll insbesondere so erfolgen, dass eine Bewegung des Luftleitelements zur Luftablenkung nicht wahrnehmbar ist. Ferner sollen die Lamellen über eine Luftaustrittsöffnung des Luftausströmers nicht sichtbar sein.

Die Aufgabe wird erfindungsgemäβ durch einen Luftausströmer gemäß dem unabhängigen Anspruch 1 gelöst.

Die Luftablenkung über die Lamellen ist gegenüber im Luftkanal vorgelagerten Lamellen deutlich verbessert, da die Luftablenkung über die Lamellen nicht vor der Luftablenkung über das Luftleitelement erfolgt. Über das nach hinten ragende Ablenkelement des Luftleitelementes, wird einströmende Luft in den Luftkanal entweder zu einer der beiden Gruppen von Lamellen oder zu den Gruppen von Lamellen gemeinsam zugeführt. Die so abgelenkte Luft wird anschließend über die erste Gruppe von Lamellen und die zweite Gruppe von Lamellen entweder in einem der Bereiche oder in beiden Bereichen abgelenkt und strömt dann über eine Luftaustrittsöffnung aus dem Luftkanal.

Das Luftleitelement ist im Wesentlichen mittig in dem Luftkanal verdrehbar gelagert, wobei geringfügige Abweichungen von der mittigen Lagerung bei weiteren Ausführungen vorgesehen sein können. In diesen Ausführungen kann eine stärkere Luftablenkung nach oben oder unten erreicht werden. Solche Luftausströmer können bspw. in einem Fuß- oder Kopfbereich angeordnet sein, damit eine stärkere Luftablenkung nach oben oder unten erreicht wird.

In noch weiteren Ausführungen ist das Luftleitelement mittig in dem Luftkanal gelagert, so dass in einer Neutralstellung der Luft-Volumenstrom über und unter dem Luftleitelement gleich groß ist.

Das Luftleitelement ist insbesondere so ausgebildet, dass das Luftleitelement keine scharfen Kanten oder Strukturen aufweist, die eine Verwirbelung der Luft bewirken. Vorzugsweise weist das Luftleitelement eine runde Form auf. Die Luftaustrittsöffnung des Luftausströmers ist so ausgebildet, dass diese eine geringere Höhe als das Luftleitelement aufweist. Die Gruppen von Lamellen befinden sich daher außerhalb des Sichtfeldes. In Blickrichtung auf die Luftaustrittsöffnung des Luftausströmers ist damit nur eine vordere Seite des Luftleitelements zu sehen, wobei die Seite zwar ebenfalls entlang der Schwenkachse verdreht werden kann, jedoch keine sonstige Verlagerung erfährt. Das Ablenkelement, welches die Luftablenkung bewirkt, ist zudem hinter dem Luftleitelement in Blickrichtung auf den Luftausströmer und hinter den Gruppen von Lamellen angeordnet, sodass dieses nicht sichtbar ist.

Das Luftleitelement ist zwischen zwei Stegen verdrehbar gelagert. Zusätzlich sind die mindestens zwei Gruppen von gegenüberliegenden Lamellen über die Stege verschwenkbar gelagert. Die Stege dienen einerseits zur Lagerung des Luftleitelementes und andererseits zu Lagerung der mindestens zwei Gruppen von gegenüberliegenden Lamellen. Die Lamellen sind dann über die Stege und die gegenüberliegende Gehäusewand verschwenkbar gelagert.

Das Luftleitelement kann zusätzlich dazu oder alternativ auf einer Lagerwelle verdrehbar gelagert sein. Ist das Luftleitelement nur auf einer Lagerwelle gelagert, können die Lamellen über Lagerzapfen gelagert werden, die nur in einer Gehäusewand des Luftausströmers, nur in der Lagerwelle oder beiden drehbar gelagert sind. Sind Lagerzapfen der Lamellen drehbar in der Lagerwelle gelagert, weist das Luftleitelement Langlöcher auf, sodass bei einem Verschwenken bzw. Verdrehen des Luftleitelementes kein Blockieren der Lamellen erfolgt.

Das Ablenkelement kann starr oder schwenkbeweglich mit dem Luftleitelement verbunden sein.

Ist das Ablenkelement starr mit dem Luftleitelement verbunden, so bewirkt ein Verschenken des Luftleitelementes eine direkte Verlagerung des Ablenkelementes. Bei einer schwenkbeweglichen Lagerung kann ein entgegengesetztes Verschwenken erfolgen. Hierzu kann das Ablenkelement beispielsweise drehbar im Gehäuse gelagert sein und eine Kulisse aufweisen, in der ein Stift geführt ist, der mit dem Luftleitelement verbunden ist. Das Luftleitelement kann aber auch einen Zahnradabschnitt aufweisen, der mit einem korrespondierenden Zahnradabschnitt des Ablenkelementes in Eingriff steht, wobei das Ablenkelement ebenfalls verschwenkbar im Luftkanal gelagert ist. Beim Verschwenken des Luftleitelementes erfolgt daher ein entgegengesetztes Verschwenken des Ablenkelementes.

Die gegenüberliegenden Gruppen von Lamellen können über eine gemeinsame Achse miteinander gekoppelt sein. Ein Verschwenken der gemeinsamen Achse bewirkt dabei ein Verschwenken der beiden Gruppen von gegenüberliegenden Lamellen. Die Achse kann beispielsweise durch das Luftleitelement geführt sein, wobei dieses dann entsprechende Langlöcher bzw. Kulissen aufweisen muss, damit beim Verschwenken der Lamellen das Verschwenken des Luftleitelementes und umgekehrt nicht behindert wird.

Die gemeinsame Achse kann ferner mit einer Gabel eines Bedienelementes oder einem außerhalb des Luftkanals angeordneten Verstellelement zum Verschwenken der Lamellen gekoppelt sein. Die gemeinsame Achse ermöglicht es, beide Gruppen von Lamellen über ein gemeinsames Bedienelement zu verschwenken. Über das Bedienelement kann zusätzlich die Luftzufuhr über das Ablenkelement gesteuert werden. Hierzu wird das Bedienelement um die Schwenkachse des Luftleitelementes in eine Richtung gedrückt. Bspw. nach oben oder unten. Dies bewirkt ein Verdrehen des Luftleitelementes und dabei eine Verlagerung des Ablenkelementes. Zusätzlich wird über das Bedienelement ein Verschwenken der Lamellen erreicht, wobei das Bedienelement hierzu um eine orthogonal zu der Schwenkachse des Luftleitelementes verlaufende Achse verschwenkt wird.

Die Luftaustrittsöffnung des Luftausströmers kann ferner im Luftaustrittsbereich mindestens eine Fase aufweisen. Die mindestens eine Fase verbessert die Luftablenkung. Hierzu ist die mindestens eine Fase, die sich im Bereich der Luftaustrittsöffnung an jeder Kante befinden kann, so ausgerichtet, dass sie im Wesentlichen tangential zur runden bzw. einer gekrümmten Oberfläche des Luftleitelementes im vorderen Abschnitt des Luftausströmers verläuft. Dies gilt insbesondere für die Fasen, die sich parallel zu dem Luftleitelement erstrecken. Für Fasen, die sich orthogonal zu den vorstehend genannten Fasen erstrecken, erfolgt deren Ausrichtung analog zu diesen Fasen. Gleiches gilt für die Fasen, die sich in den Verbindungsbereichen zwischen den vorstehend genannten Fasen erstrecken.

Der Luftausströmer kann in weiteren Ausführungen eine Vielzahl von Gruppen von Lamellen aufweisen, wobei die Lamellen umlaufend angeordnet sind. Beispielsweise kann der Luftausströmer vier Gruppen von gegenüberliegenden Lamellen aufweisen, wobei sich jeweils zwei Gruppen gegenüberliegen. Der Luftausströmer kann dabei eine im Wesentlichen rechteckige Form aufweisen. Der Luftausströmer kann in weiteren Ausführungsformen auch mehrere Gruppen von gegenüberliegenden Lamellen aufweisen.

Der Luftausströmer kann in einer weiteren Ausführungsform mindestens ein paar Rampen aufweisen, die an gegenüberliegenden Seitenwänden im Luftkanal angeordnet sind. Die Rampen können im Bereich des Lufteintritts und des Luftaustritts im Luftkanal angeordnet sein und eine verbesserte Luftablenkung bewirken. Die Rampen können vorzugsweise eine solche Steigung aufweisen bzw. so ausgebildet sein, dass diese in den Extremstellungen der Lamellen eine Verlängerung dieser bilden.

Mindestens die gegenüberliegenden Gehäusewände des Luftausströmers können konzentrisch zu den Luftleitelementen angeordnet sein und der Abstand zwischen dem Luftleitelement und den gegenüberliegenden Gehäusewänden im Wesentlichen gleich bleiben. Die konzentrische Anordnung des Luftleitelementes zu den gegenüberliegenden Gehäusewänden sorgt für eine gute Luftablenkung. Würden Engstellen zwischen den gegenüberliegenden Gehäusewänden und dem Luftleitelement bestehen, würde eine daraus folgende Kompression der Luft zum Luftaustrittsbereich des Luftausströmers hin die seitliche Ablenkung stark verschlechtern.

Bei den Luftausströmern können die einzelnen Lamellen der Gruppen über eine Koppelstange miteinander verbunden sein, sodass ein Verschwenken einer der Lamellen automatisch ein Verschwenken der anderen Lamellen bewirkt. Dabei verläuft vorzugsweise die gemeinsame Koppelachse zum Verschwenken beider Gruppen gegenüberliegender Lamellen hinter der Lagerachse der einzelnen Lamellen.

Ferner kann ein Getriebe bzw. eine Bremseinrichtung vorgesehen sein, die ein definiertes Drehmoment für das Luftleitelement beim Verschwenken bereitstellt.

Das Luftleitelement und/oder die Lamellen können manuell oder motorisch verstellt werden. Beispielsweise kann lediglich das Luftleitelement motorisch verstellt werden, wobei die Lamellen über einen Griff bzw. ein Bedienelement verstellt werden können. In weiteren Ausführungen können zusätzlich auch die Lamellen motorisch verstellt werden.

Weitere Vorteile sowie Ausgestaltungsmöglichkeiten der vorliegenden Erfindung ergeben sich aus der nachfolgenden Figurenbeschreibung von nicht einschränkend zu verstehenden Ausführungsbeispielen. In den Zeichnungen zeigt:
- Fig. 1: eine perspektivische Darstellung eines Luftausströmers einer ersten Ausführungsform;
- Fig. 2: eine Vorderansicht auf den Luftausströmer der ersten Ausführungsform mit einem nach oben verschwenkten Bedienelement;
- Fig. 3: eine Schnittansicht der Darstellung von Fig. 2 entlang der Linie F-F;
- Fig. 4: eine Vorderansicht auf den Luftausströmer der ersten Ausführungsform in einer Neutralstellung;
- Fig. 5: eine Schnittansicht der Darstellung von Fig. 4 entlang der Linie B-B;
- Fig. 6: eine Vorderansicht auf den Luftausströmer der ersten Ausführungsform mit verschwenkten Lamellen;
- Fig. 7: eine Schnittansicht der Darstellung von Fig. 6 entlang der Linie D-D;
- Fig. 8: eine Vorderansicht auf einen Luftausströmer einer zweiten Ausführungsform in einer Neutralstellung;
- Fig. 9: eine Schnittansicht der Darstellung von Fig. 8 entlang der Linie E-E;
- Fig. 10: eine Vorderansicht auf den Luftausströmer der zweiten Ausführungsform mit einem nach oben verschwenkten Bedienelement;
- Fig. 11: eine Schnittansicht der Darstellung von Fig. 10 entlang der Linie A-A;
- Fig. 12: eine Vorderansicht auf den Luftausströmer der zweiten Ausführungsform mit verschwenkten Lamellen;
- Fig. 13: eine Schnittansicht der Darstellung von Fig. 12 entlang der Linie C-C;
- Fig. 14: eine Vorderansicht auf einen Luftausströmer einer dritten Ausführungsform in einer Neutralstellung;
- Fig. 15: eine Schnittansicht der Darstellung von Fig. 14 entlang der Linie A-A;
- Fig. 16: eine Vorderansicht auf einen Luftausströmer einer vierten Ausführungsform, die nicht zur vorliegenden Erfindung gehört, in einer Neutralstellung;
- Fig. 17: eine Schnittansicht der Darstellung von Fig. 16 entlang der Linie A-A;
- Fig. 18: eine Vorderansicht auf einen Luftausströmer einer fünften Ausführungsform, die nicht zur vorliegenden Erfindung gehört, in einer Neutralstellung; und
- Fig. 19: eine Schnittansicht der Darstellung von Fig. 18 entlang der Linie A-A.

In den Zeichnungen mit gleichen Bezugszeichen versehene Teile entsprechen im Wesentlichen einander, sofern nichts anderes angegeben ist. Darüber hinaus wird darauf verzichtet, Bestandteile zu beschreiben und zu zeigen, welche nicht Wesentlich zum Verständnis der hierin offenbarten technischen Lehre sind.

Die Figuren zeigen verschiedene Ausführungen eines Luftausströmers 10 mit einem Luftleitelement 40 und einer Ablenkeinrichtung, bestehend aus zwei Gruppen gegenüberliegender Lamellen 30. Insofern sich die verschiedenen Ausführungsformen voneinander unterscheiden, werden jeweils nur die Unterschiede genauer erläutert.

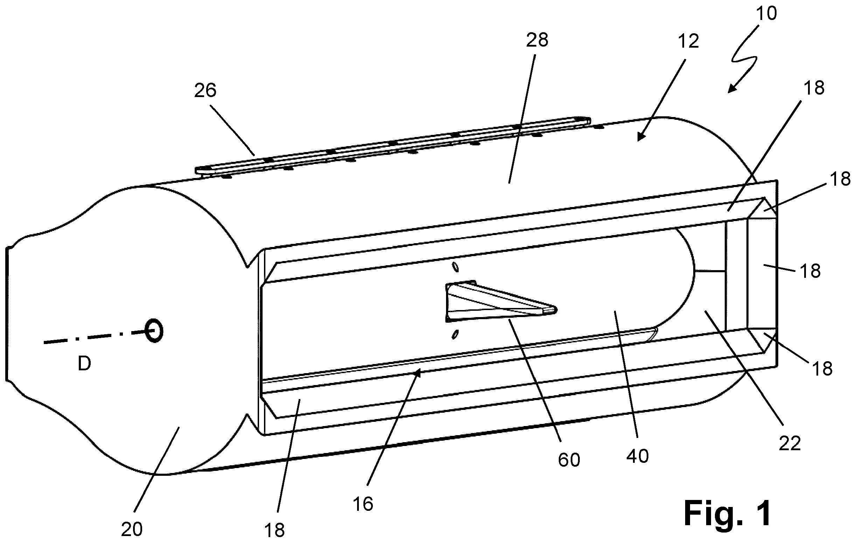

Fig. 1 zeigt eine perspektivische Darstellung eines Luftausströmers 10 einer ersten Ausführungsform. Der Luftausströmer 10 weist ein Gehäuse 12 mit gegenüberliegenden Seitenwänden 20 und gegenüberliegenden Gehäusewänden 28 auf. Im Bereich der Luftaustrittsöffnung 16 weist der Luftausströmer 10 Fasen 18 auf. Die Fasen 18 befinden sich sowohl im Bereich der Seitenwände 20, als auch im Bereich der Gehäusewände 28 und den dazwischenliegenden Abschnitten.

Im Luftkanal 14 des Luftausströmers 10 ist ein Luftleitelement 40 um die Drehachse D drehbar gelagert. In dem Luftleitelement 40 ist zudem ein Bedienelement 60 aufgenommen, das zum Verschwenken von Lamellen 30 und zum Verdrehen des Luftleitelementes 40 dient.

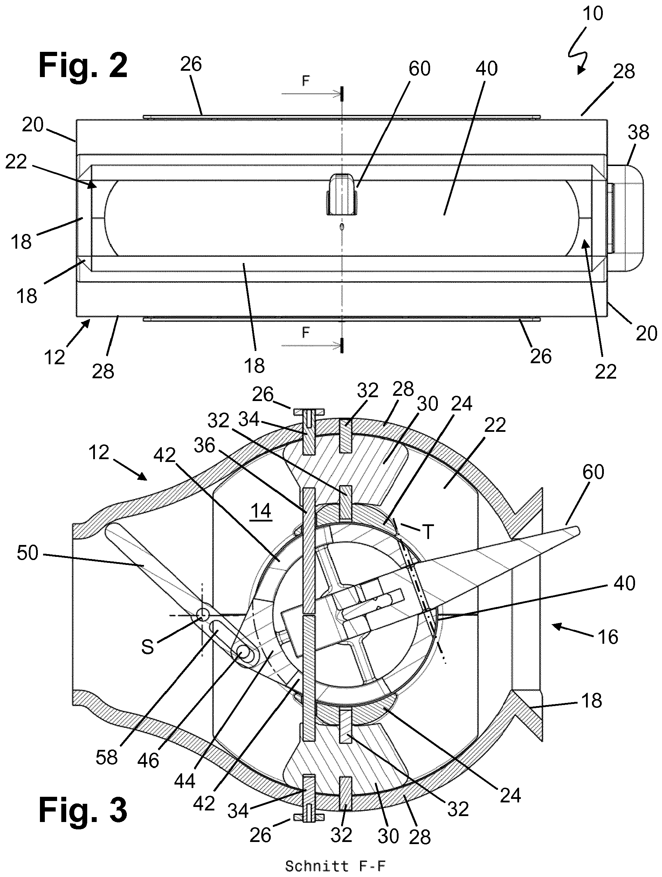

Fig. 2 zeigt eine Vorderansicht auf den Luftausströmer 10 der ersten Ausführungsform mit einem nach oben verschenkten Bedienelement 60.

Fig. 3 zeigt eine Schnittansicht der Darstellung von Fig. 2 entlang der Linie F-F.

Das Luftleitelement 40 ist drehbar zwischen zwei Stegen 24 gelagert. Die Stege 24 erstrecken sich über die gesamte Breite des Luftausströmers 10 und weisen im Wesentlichen die gleiche Länge auf wie das Luftleitelement 40. Das Luftleitelement 40 weist einen im Wesentlichen kreisrunden Querschnitt auf. Lediglich an der Rückseite ist ein Verbindungsabschnitt 44 vorgesehen, an dem ein Stift 46 angeordnet ist. Der Stift 46 greift in eine Kulisse 58 eines Ablenkelementes 50. Das Ablenkelement 50 ist um eine Schwenkachse 5 verschwenkbar im Gehäuse 12 gelagert. Eine Verlagerung des Stiftes 46 bewirkt daher ein Verschwenken des Ablenkelementes 50 ausgehend von einer Neutralstellung nach oben und nach unten. Hierüber ist es möglich einströmende Luft entsprechend abzulenken und den beiden Gruppen von Lamellen zuzuführen.

Der Luftausströmer 10 weist zudem die Lamellen 30 auf, die über Lagerzapfen 32 in den Gehäusewänden 28 und den Stegen 24 verschwenkbar gelagert sind. Ferner sind die Lamellen 30 über eine Koppelachse 36 miteinander verbunden, sodass ein Verschwenken der beiden Gruppen von Lamellen 30 gemeinsam erfolgt. Die Kopplung der oberen Gruppe von Lamellen 30 und der unteren Gruppe von Lamellen 30 erfolgt über entsprechende Koppelzapfen, die über Koppelstangen 26 miteinander verbunden sind.

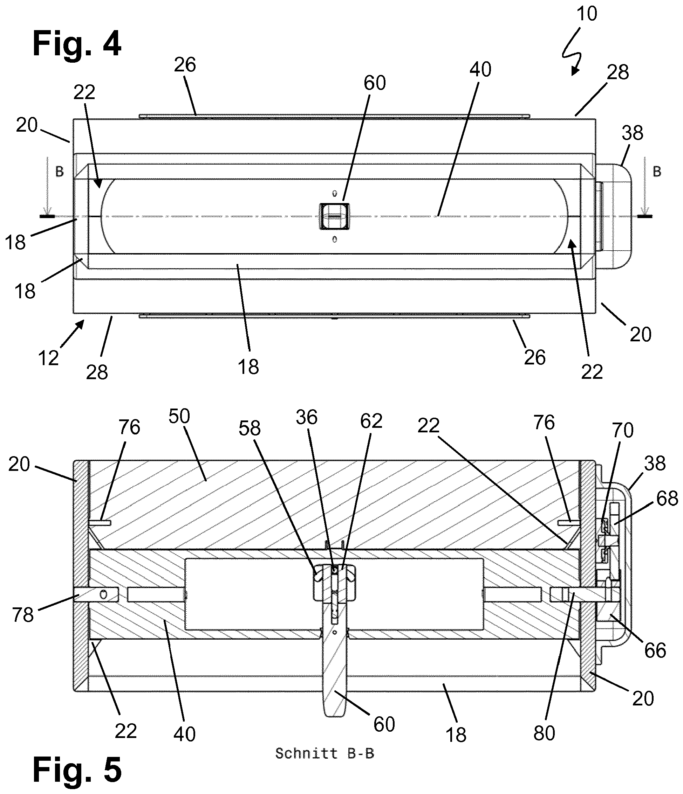

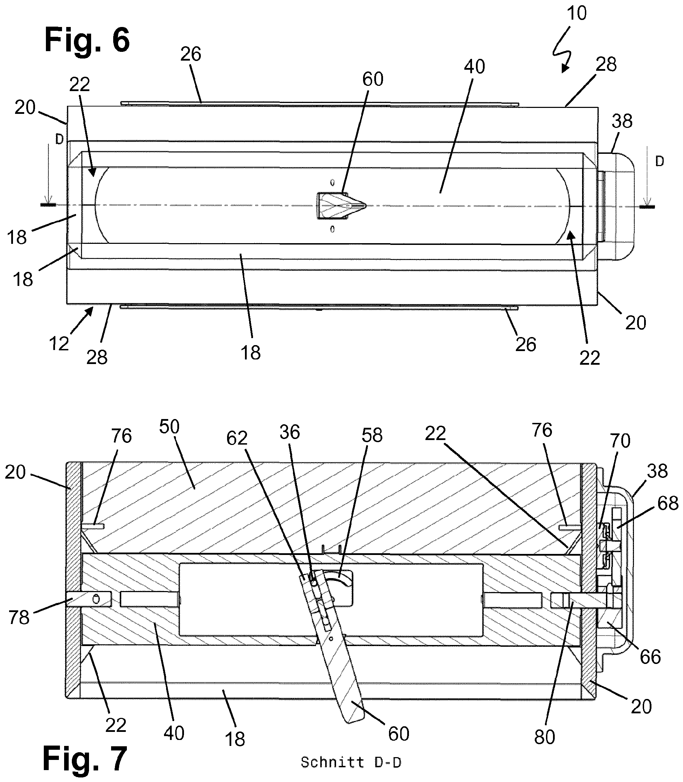

Damit bei einem Verschwenken der Lamellen 30 und einem Verdrehen des Luftleitelements 40 keine Behinderung erfolgt, weist das Luftleitelement 40 Öffnungen 42 auf. Die Öffnungen 42 dienen dazu, dass die Koppelachse 36 bei einem Verschwenken der Lamellen 30 diese nicht durch das Luftleitelement 40 blockiert werden. Hierzu weisen die Stege 24 ebenfalls eine Kulisse 58 (siehe beispielsweise Fig. 5 und 7) auf.

Das Bedienelement 60 ist um eine Schwenkachse T verschwenkbar im Luftleitelement 40 gelagert. Das Bedienelement 60 ist mit einer Gabel 62 verbunden, welche die gemeinsame Koppelachse 36 umgreift. Ein Verschwenken des Bedienelementes 60 um die Schwenkachse T bewirkt ein Verschwenken beider Gruppen von Lamellen 30 aufgrund der Kopplung durch die Koppelachse 36.

Die Gabel 62 und das Bedienelement 60 können so miteinander verbunden sein, dass ein Längenausgleich beim Verschwenken des Luftleitelementes 40 um dessen Drehachse D erfolgt.

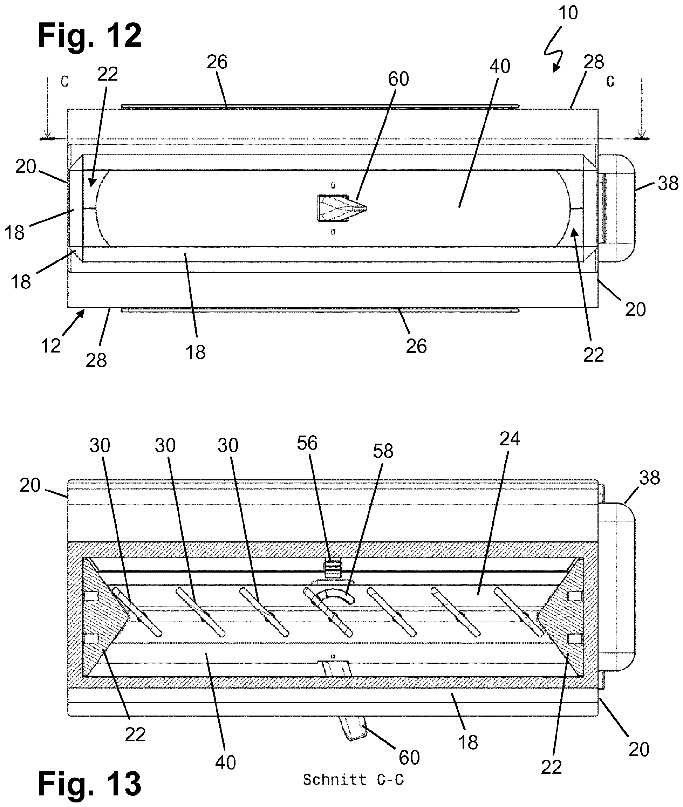

Weiterhin weist der Luftausströmer 10 Rampen 22 auf, die sich insbesondere im Lufteintritt und im Luftaustritt befinden. Die Ausbildung der Rampen ist beispielsweise aus Fig. 13 für einen Luftausströmer 10 der zweiten Ausführungsform dargestellt.

Bei dem Luftausströmer 10 sind die Lamellen 30 von außen in Blickrichtung auf die Luftaustrittsrichtung 16 nicht sichtbar. Dies liegt daran, dass der Durchmesser des Luftleitelements 40 größer oder zumindest gleich groß ist, wie die Höhe der Luftaustrittsöffnung 16. Zudem sind lediglich das Bedienelement 60 und die Vorderseite des Luftleitelementes 40 sichtbar. Eine Luftzuführung über das Luftleitelement 40 erfolgt jedoch stets über das Ablenkelement 50, das von außen nicht sichtbar ist. Der Luftausströmer 10 ermöglich es daher, eine Luftablenkung bereitzustellen, ohne dass bewegbare Komponenten im Sichtfeld eines Betrachters liegen. Zusätzlich wird eine verbesserte Luftablenkung über die Lamellen 30 erreicht, da diese sich an einer vorderen Position des Luftausströmers 10 befinden. Bei herkömmlichen Luftausströmern aus dem Stand der Technik sind die Lamellen in der Regel weiter stromabwärts im Bereich des Luftkanals 14, beispielsweise auf Höhe des Ablenkelementes 50 angeordnet.

Die Luftablenkung über die Lamellen 30 wird zusätzlich über die Rampen 22 sowie die Fasen 18 unterstützt. Die in Fig. 3 dargestellten gegenüberliegenden Fasen 18 sind so ausgerichtet, dass sie tangential zu dem Luftleitelement 40 verlaufen. Eine gute Luftablenkung über die Lamellen 30 wird insbesondere auch deshalb erreicht, weil das Luftleitelement 40 konzentrisch zu den Gehäusewänden 28 angeordnet ist und einen im Wesentlichen gleichen Abstand zu den Gehäusewänden 28 aufweist. Würde der Abstand zwischen dem Luftleitelement 40 und den Gehäusewänden 28 insbesondere im Luftaustrittsbereich abnehmen, würde das zu einer Beschleunigung der austretenden Luft führen, welche jedoch der Luftablenkung entgegenwirkt.

Fig. 4 zeigt eine Vorderansicht auf den Luftausströmer 10 der ersten Ausführungsform in einer Neutralstellung und Fig. 5 zeigt eine Schnittansicht der Darstellung von Fig. 4 entlang der Linie B-B.

An dem Gehäuse 12 ist zusätzlich ein Gehäusekasten 28 angeordnet, in dem eine Dämpfungseinrichtung vorgesehen ist. Das Luftleitelement 40 ist über einen Lagerzapfen 78 und eine Lagerwelle 80 drehbar im Gehäuse über die Seitenwände 20 gelagert. Die Lagerwelle 80 ragt aus der Seitenwand 20 heraus und ist mit einem Zahnrad 66 verbunden. Das Zahnrad 66 steht mit einem Zahnrad 68 in Eingriff, welches mit einem Dämpfer 70 gekoppelt ist. Über den Dämpfer 70 wird ein definiertes Drehmoment zum Verschwenken des Luftleitelementes 40 bereitgestellt.

Das Ablenkelement 50 ist über Lagerzapfen 76 in den gegenüberliegenden Gehäusewänden 20 gelagert. Fig. 5 zeigt zusätzlich die Rampen 22, welche die einströmende Luft zu den Lamellen 30 leiten. Insbesondere erfolgt über die Rampen 22 im Lufteintritts- und im Luftaustrittbereich eine kurzzeitige Beschleunigung der einströmenden Luft.

Fig. 6 zeigt eine Vorderansicht auf den Luftausströmer 10 der ersten Ausführungsform mit verschwenkten Lamellen 30 und Fig. 7 zeigt eine Schnittansicht der Darstellung von Fig. 6 entlang der Linie D-D. Das Verschwenken der Gruppen von Lamellen 30 erfolgt über das Bedienelement 60, das über die Koppelachse 36 die beiden Gruppen miteinander verbindet. Die einzelnen Lamellen 30 der jeweiligen Gruppen sind über ihre Koppelzapfen 34 und die Koppelstangen 26 miteinander verbunden.

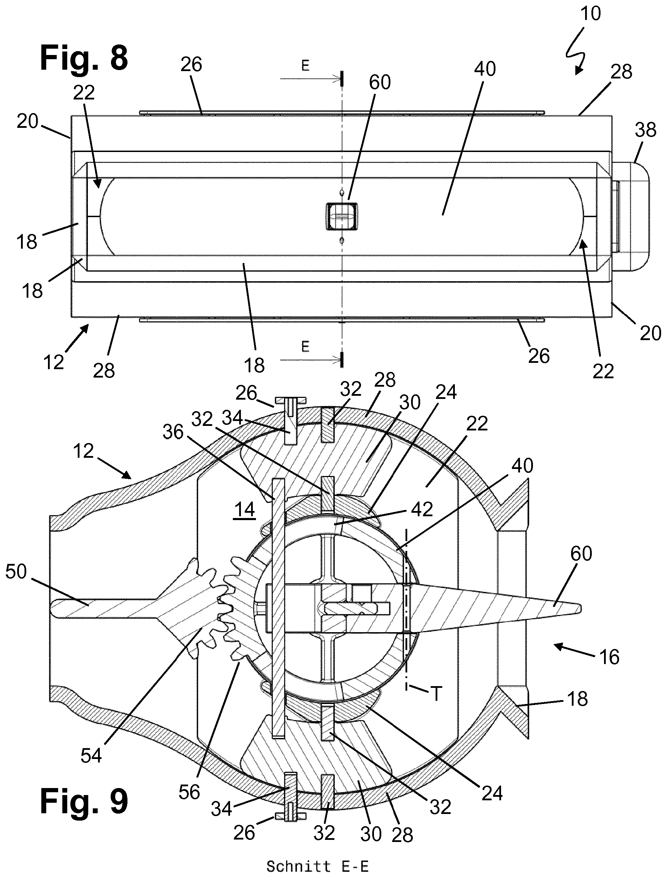

Fig. 8 zeigt eine Vorderansicht auf einen Luftausströmer 10 einer zweiten Ausführungsform in einer Neutralstellung und Fig. 9 zeigt eine Schnittansicht der Darstellung von Fig. 8 entlang der Linie E-E.

Die zweite Ausführungsform unterscheidet sich von der ersten Ausführungsform dadurch, dass anstelle eines Stiftes 46, der in eine Kulisse 58 eingreift, das Luftleitelement 40 an seiner Rückseite einen Zahnradabschnitt 56 aufweist, der mit einem entsprechenden Zahnradabschnitt 54 des Ablenkelementes 50 in Eingriff steht.

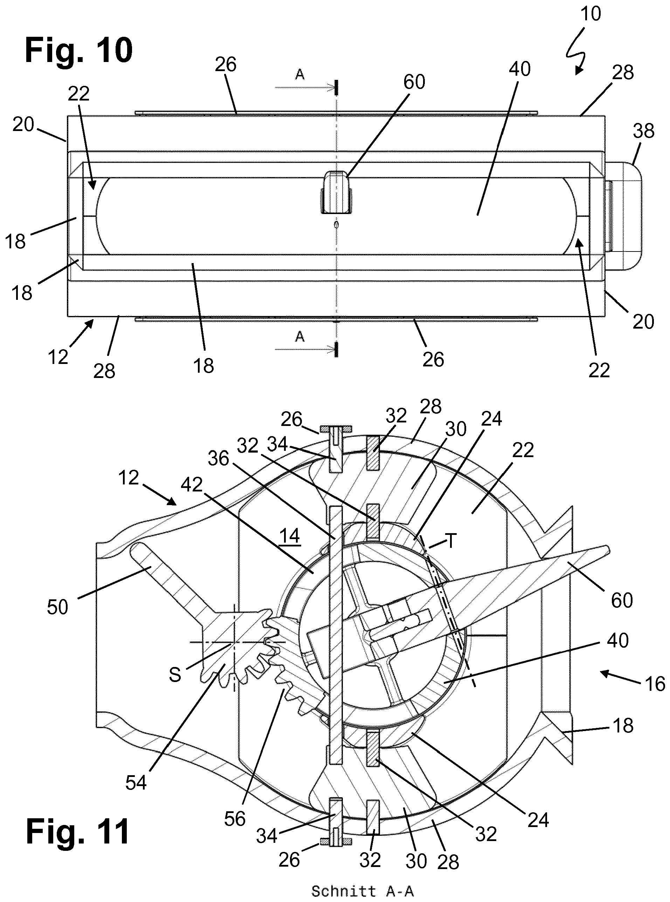

Fig. 10 zeigt eine Vorderansicht auf den Luftausströmer 10 der zweiten Ausführungsform mit einem nach oben verschwenkten Bedienelement 60 und Fig. 11 zeigt eine Schnittansicht der Darstellung von Fig. 10 entlang der Linie A-A.

Bei einem Verschwenken des Luftleitelementes 40 nach oben erfolgt ebenfalls ein Verschwenken des Ablenkelementes 50 nach oben. Der Vorteil gegenüber einer starren Ausführung eines Ablenkelementes 50 liegt darin, dass eine intuitive Steuerung des Luftausströmers 10 möglich ist. Dies bietet sich insbesondere dann an, wenn eine manuelle Steuerung des Luftausströmers 10 über das Bedienelement 60 erfolgt. Bei einer motorischen Ansteuerung des Luftausströmers 10 kann das Ablenkelement 50 auch fest mit dem Luftleitelement 40 verbunden sein.

Fig. 12 zeigt eine Vorderansicht auf den Luftausströmer 10 der zweiten Ausführungsform mit verschwenkten Lamellen 30 und Fig. 13 zeigt eine Schnittansicht der Darstellung von Fig. 12 entlang der Linie C-C.

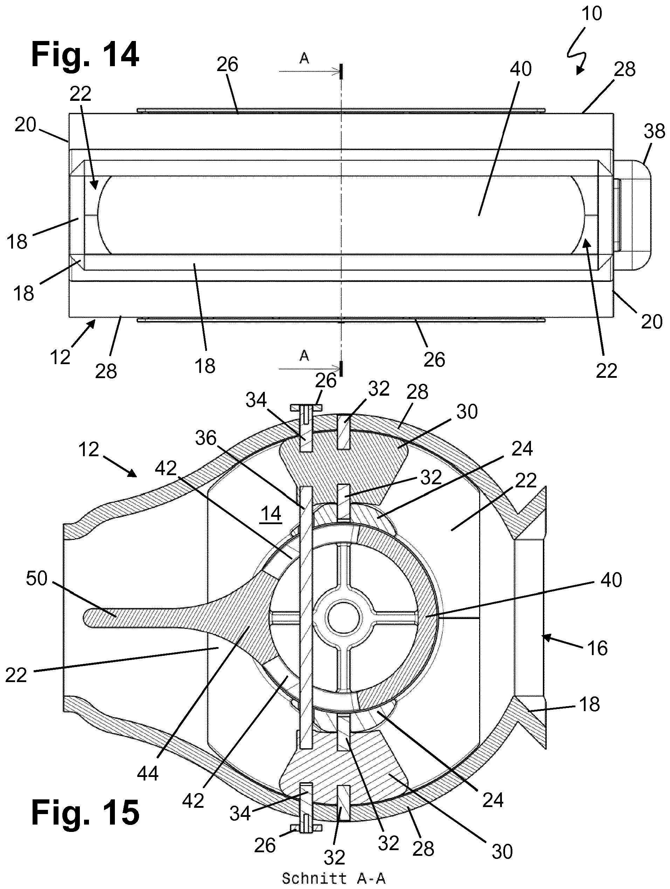

Die Rampen 22 sind insbesondere so angeordnet und aufgebaut, dass diese im Wesentlichen eine gleiche Ablenkfläche aufweisen, wie die Lamellen 30 in einer maximal verschwenkten Stellung. Fig. 14 zeigt eine hiervon abweichende Ausrichtung, jedoch müssen die Rampen 22 nicht zwangsläufig die gleiche Ausrichtung aufweisen, wie die Lamellen 30 in ihren maximal verschwenkten Stellungen. Die Rampen 22 unterstützen vorteilhaft die Luftablenkung, da eine Beschleunigung der durchströmenden Luft im Bereich der Lamellen 30 erfolgt. Dies bewirkt eine bessere Luftablenkung als bei Luftausströmern mit einer geringeren Geschwindigkeit. Damit jedoch die Luft nicht zu stark beschleunigt austritt, sind die Rampen 22 so ausgebildet, dass diese den Luftkanal wieder aufweiten, nachdem die Luft den Bereich mit den Lamellen 30 passiert hat.

Fig. 14 zeigt eine Vorderansicht auf einen Luftausströmer 10 einer dritten Ausführungsform in einer Neutralstellung und Fig. 15 zeigt eine Schnittansicht der Darstellung von Fig. 14 entlang der Linie A-A.

Bei dieser Ausführungsform weist der Luftausströmer 10 kein Bedienelement 60 auf. Das Verschwenken des Luftleitelementes 40 erfolgt in dieser Ausführung motorisch, wobei in dem Gehäusekasten 38 beispielsweise ein Ritzel vorgesehen sein kann, das mit einem Zahnrad der Lagerwelle 80 und mit einem Elektromotor gekoppelt ist. Das Verschwenken der Lamellen 30 kann ebenfalls elektromotorisch oder über ein anderes Verstellelement erfolgen.

Ein weiterer Unterschied besteht darin, dass das Luftleitelement 40 ein starr über den Verbindungsabschnitt 44 angebrachtes Ablenkelement 50 aufweist. Da der Luftausströmer 10 kein Bedienelement 60 aufweist, und deshalb nicht intuitiv über einen Benutzer gesteuert wird, ist auch die starre Ausbildung bzw. Verbindung des Ablenkelementes 50 mit dem Luftleitelement 40 vorteilhaft möglich, ohne dass die Steuerung hierunter leidet. Soll beispielsweise eine Luftablenkung nach unten erfolgen, so wird das Luftleitelement 40 um seine Drehachse D so verdreht, dass das Ablenkelement 50 gegen den Uhrzeigersinn bewegt wird.

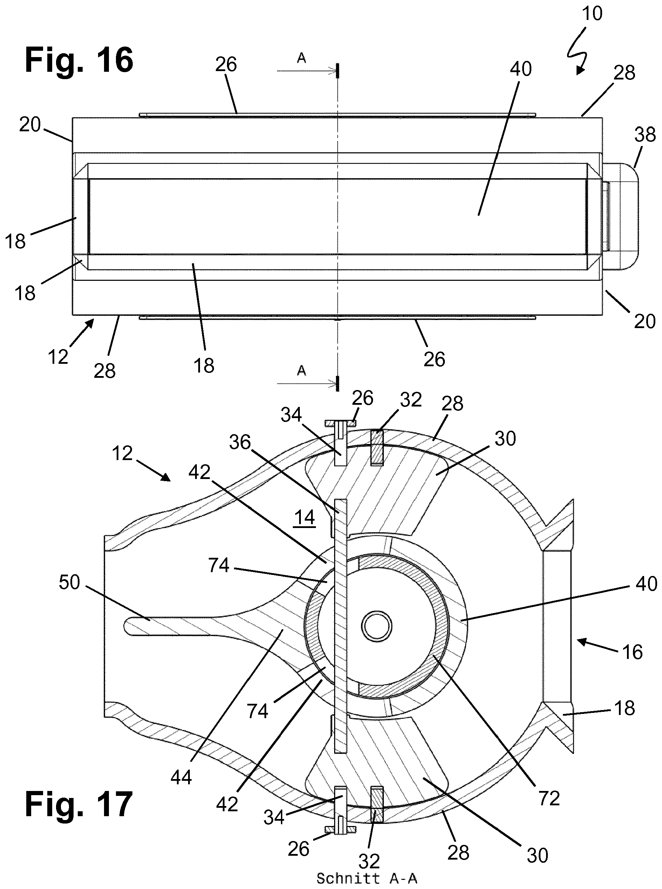

Fig. 16 zeigt eine Vorderansicht auf einen Luftausströmer 10 einer vierten Ausführungsform, die nicht zur vorliegenden Erfindung gehört, in einer Neutralstellung und Fig. 17 zeigt eine Schnittansicht der Darstellung von Fig. 16 entlang der Linie A-A.

Auch bei diesem Luftausströmer ist kein Bedienelement 60 vorgesehen. Ein weiterer Unterschied besteht darin, dass neben einer starren Ausführung des Ablenkelementes 50 am Luftleitelement 40 das Luftleitelement 40 nicht zwischen zwei Stegen 24 gelagert ist, sondern auf einer Lagerwelle 72. Die Lagerwelle 72 weist wie das Luftleitelement 40 Öffnungen 74 auf, die verhindern sollen, dass beim Verschwenken der Lamellen 30 ein Blockieren der Koppelachse 36 auftritt. Die Lamellen 30 sind in dieser Ausführungsform lediglich über Lagerzapfen 32 verschwenkbar an den gegenüberliegenden Gehäusewänden 28 gelagert.

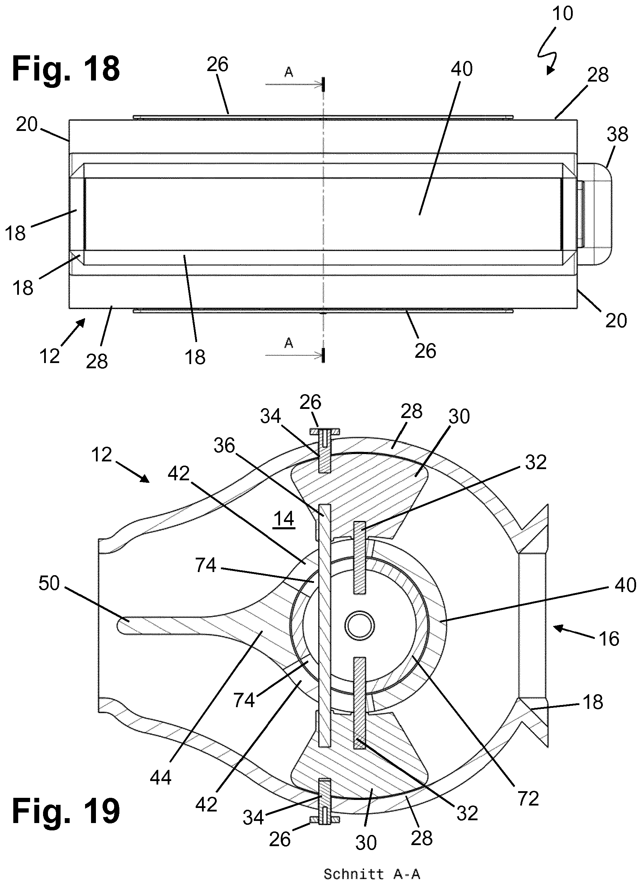

Fig. 18 zeigt eine Vorderansicht auf einen Luftausströmer 10 einer fünften Ausführungsform, die nicht zur vorliegenden Erfindung gehört, in einer Neutralstellung und Fig. 19 zeigt eine Schnittansicht der Darstellung von Fig. 18 entlang der Linie A-A.

Die in den Fig. 18 und 19 gezeigte fünfte Ausführungsform unterscheidet sich von der vierten Ausführungsform darin, dass die Lamellen 30 über Lagerzapfen 32 lediglich verschwenkbar an der Lagerwelle 72 gelagert sind. Die Lagerwelle 72 weist hierzu entsprechende Aufnahmen für die Lagerzapfen 32 auf. Die Öffnungen 42 des Luftleitelemetes 40 müssen dann so gewählt sein, dass auch bei einem Verdrehen des Luftleitelementes 40 um dessen Drehachse D kein Blockieren durch die Lagerzapfen 32 auftritt.

Die Lagerzapfen 32 können auch direkt an den Lamellen 30 angeformt sein.

Die einzelnen Bestandteile der an den Fig. 1 - 19 gezeigten verschiedenen Ausführungsformen von Luftausströmern 10 können mehrteilig ausgeführt sein. Dies gilt insbesondere für das Gehäuse 12, das Luftleitelement 40 und das Bedienelement 60. Die in den Figuren gezeigten Luftausströmer 10 weisen ein ansprechendes Erscheinungsbild auf, wobei keine beweglichen Komponenten über die Luftaustrittsöffnungen 16 sichtbar sind. Lediglich das Bedienelement 60 ist in manchen Ausführungen sichtbar. Die Anordnung der Lamellen 30 im vorderen Abschnitt des Luftausströmers 10 ermöglicht eine sehr gute seitliche Luftablenkung, welche bei sogenannten Fugenausströmern oftmals nicht erreicht werden konnte.

Die Rampen 22 und die Fasen 18 unterstützen die Luftablenkung. Ebenso sorgt die konzentrische Anordnung des Luftleitelements 40 für eine gute Ablenkung der ausströmenden Luft. Wesentlich ist aber auch, dass die seitliche Ablenkung über die Lamellen 30 nach der Ablenkung über das Luftleitelement 40 erfolgt. Der Bezug auf seitliche Ablenkung und hierzu orthogonale Ablenkung ist nicht einschränkend zu verstehen. Insbesondere kann ein in den Figuren gezeigter Luftausströmer 10 um 90 Grad gedreht angeordnet und eingebaut werden, wobei die seitliche Ablenkung dann durch das Luftleitelement 40 und die Ablenkung nach oben und unten über die Lamellen 30 erreicht wird.

Sämtliche Komponenten der Luftausströmer 10 können beispielsweise in einem Spritzgussprozess hergestellt werden und aus Kunststoff bestehen. Der verwendete Kunststoff kann weitere Zusätze aufweisen, sodass die gewünschten Materialeigenschaften erreicht werden. Ferner können verschiedene Kunststoffe verwendet werden.

### Bezugszeichenliste

- 10: Luftausströmer
- 12: Gehäuse
- 14: Luftkanal
- 16: Luftaustrittsöffnung
- 18: Fase
- 20: Seitenwand
- 22: Rampe
- 24: Steg
- 26: Koppelstange
- 28: Gehäusewand
- 30: Lamelle
- 32: Lagerzapfen
- 34: Koppelzapfen
- 36: Koppelachse
- 38: Gehäusekasten
- 40: Luftleitelement
- 42: Öffnung
- 44: Verbindungsabschnitt
- 46: Stift
- 48: Lagerachse
- 50: Ablenkelement
- 52: Kulissenführung
- 54: Zahnradabschnitt
- 56: Zahnradabschnitt
- 58: Kulisse
- 60: Bedienelement
- 62: Gabel
- 64: Verbindungsstift
- 66: Zahnrad
- 68: Zahnrad
- 70: Dämpfer
- 72: Lagerwelle
- 74: Öffnung
- 76: Lagerzapfen
- 78: Lagerzapfen
- 80: Lagerwelle
- D: Drehachse
- S: Schwenkachse
- T: Schwenkachse

## Patentansprüche

1. Luftausströmer (10) mit einer Ablenkeinrichtung und einem Luftleitelement (40), wobei die Ablenkeinrichtung mindestens zwei Gruppen von gegenüberliegenden Lamellen (30) aufweist, wobei eine erste Gruppe von Lamellen (30) zwischen dem Luftleitelement (40) und einer dem Luftleitelement (40) gegenüberliegenden ersten Gehäusewand (28) des Luftausströmers (10) und eine zweite Gruppe von Lamellen (30) zwischen dem Luftleitelement (40) und einer dem Luftleitelement (40) gegenüberliegenden zweiten Gehäusewand (28) des Luftausströmers (10) verschwenkbar gelagert sind und das Luftleitelement (40) ein in einen Luftkanal (14) nach hinten ragendes Ablenkelement (50) aufweist, **dadurch gekennzeichnet, dass** das Luftleitelement (40) im Wesentlichen mittig zwischen zwei Stegen (24) in dem Luftkanal (14) verdrehbar gelagert ist, wobei eine Luftaustrittsöffnung (16) des Luftausströmers (10) eine geringere Höhe als das Luftleitelement (40) aufweist und die mindestens zwei Gruppen von gegenüberliegenden Lamellen (30) über die Stege (24) verschwenkbar gelagert sind.

2. Luftausströmer (10) nach Anspruch 1, **dadurch gekennzeichnet, dass** das Luftleitelement (40) auf einer Lagerwelle (72) verdrehbar gelagert ist.

3. Luftausströmer (10) nach einem der Ansprüche 1 bis 2, **dadurch gekennzeichnet, dass** das Ablenkelement (50) starr oder schwenkbeweglich mit dem Luftleitelement (40) verbunden ist.

4. Luftausströmer (10) nach einem der Ansprüche 1 bis 3, **dadurch gekennzeichnet, dass** die gegenüberliegenden Gruppen von Lamellen (30) über eine gemeinsame Achse (36) miteinander gekoppelt sind.

5. Luftausströmer (10) nach Anspruch 4, **dadurch gekennzeichnet, dass** die gemeinsame Achse (36) mit einer Gabel (62) eines Bedienelements (60) oder einem außerhalb des Luftkanals (14) angeordneten Verstellelement zum Verschwenken der Lamellen (30) gekoppelt ist.

6. Luftausströmer (10) nach einem der Ansprüche 1 bis 5, **dadurch gekennzeichnet, dass** die Luftaustrittsöffnung (16) des Luftausströmers (10) im Luftaustrittsbereich mindestens eine Fase (18) aufweist.

7. Luftausströmer (10) nach einem der Ansprüche 1 bis 6, **dadurch gekennzeichnet, dass** der Luftausströmer (10) eine Vielzahl von Gruppen von Lamellen (30) aufweist, wobei die Lamellen (30) umlaufend angeordnet sind.

8. Luftausströmer (10) nach einem der Ansprüche 1 bis 7, **dadurch gekennzeichnet, dass** der Luftausströmer (10) mindestens ein Paar Rampen (22) aufweist, die an gegenüberliegenden Seitenwänden (20) im Luftkanal (14) angeordnet sind.

9. Luftausströmer (10) nach einem der Ansprüche 1 bis 8, **dadurch gekennzeichnet, dass** mindestens die gegenüberliegenden Gehäusewände (28) konzentrisch zu dem Luftleitelement (40) angeordnet sind und der Abstand zwischen dem Luftleitelement (40) und den gegenüberliegenden Gehäusewänden (28) im Wesentlichen gleich ist.

## Claims

1. Air vent (10) with a deflecting device and an air guide element (40), wherein the deflecting device comprises at least two groups of opposite slats (30), wherein a first group of slats (30) is pivotably mounted between the air guide element (40) and a first housing wall (28), which is opposite the air guide element (40), of the air vent (10) and a second group of slats (30) between the air guide element (40) and a second housing wall (28), which is opposite the air guide element (40), of the air vent (10) and the air guide element (40) comprises a deflecting element (50) projecting rearwardly into an air channel (14), **characterised in that** the air guide element (40) is rotatably mounted substantially centrally between two webs (24) in the air channel (14), wherein an air outlet opening (16) of the air vent (10) has a smaller height than the air guide element (40) and the at least two groups of opposite slats (30) are pivotably mounted by way of the webs (24).

2. Air vent (10) according to claim 1, **characterised in that** the air guide element (40) is rotatably mounted on a bearing shaft (72).

3. Air vent (10) according to one of claims 1 and 2, **characterised in that** the deflecting element (50) is rigidly or pivotably movably connected with the air guide element (40).

4. Air vent (10) according to any one of claims 1 to 3, **characterised in that** the opposite groups of slats (30) are coupled together by way of a common axle (36).

5. Air vent (10) according to claim 4, **characterised in that** the common axle (36) is coupled with a fork (62) of a control element (60) or with an adjusting element, which is arranged outside the air channel (14), for pivoting the slats (30).

6. Air vent (10) according to any one of claims 1 to 5, **characterised in that** the air outlet opening (16) of the air vent (10) has at least one chamfer (18) in the air outlet region.

7. Air vent (10) according to any one of claims 1 to 6, **characterised in that** the air vent (10) comprises a plurality of groups of slats (30), wherein the slats (30) have a rotationalarrangement.

8. Air vent (10) according to any one of claims 1 to 7, **characterised in that** the air vent (10) comprises at least one pair of ramps (22), which are arranged at opposite side walls (20) in the air channel (14).

9. Air vent (10) according to any one of claims 1 to 8, **characterised in that** at least the opposite housing walls (28) are arranged concentrically with respect to the air guide element (40) and the spacing between the air guide element (40) and the opposite housing walls (28) is substantially equal.

## Revendications

1. Dispositif d'écoulement d'air (10) avec un dispositif de déflexion et un élément de guidage d'air (40), où le dispositif de déflexion comprend au moins deux groupes de lamelles (30) opposées, dans lequel un premier groupe de lamelles (30) étant disposé entre l'élément de guidage d'air (40) et une première paroi de boîtier (28) du dispositif d'écoulement d'air (10) opposée à l'élément de guidage d'air (40) et un deuxième groupe de lamelles (30) étant disposé entre l'élément de guidage d'air (40) et une deuxième paroi de boîtier (28) du dispositif d'écoulement d'air (10) opposée à l'élément de guidage d'air (40)sont disposés de manière à pouvoir pivoter et l'élément de guidage d'air (40) présente un élément de déviation (50) dépassant vers l'arrière dans le canal d'air (14), **caractérisé en ce que** l'élément de guidage d'air (40) est placé essentiellement au milieu entre deux entretoises (24) dans le conduit d'air (14), où une ouverture de sortie d'air (16) du dispositif d'écoulement d'air (10) présente une hauteur inférieure à celle de l'élément de guidage d'air (40) et où les au moins deux groupes de lamelles (30) opposées sont disposés de manière à pouvoir pivoter au-dessus des entretoises (24).

2. Dispositif d'écoulement d'air (10) selon la revendication 1, **caractérisé en ce que** l'élément de guidage d'air (40) est disposé de manière à pouvoir tourner sur un arbre de palier (72).

3. Dispositif d'écoulement d'air (10) selon l'une des revendications 1 à 2, **caractérisé en ce que** l'élément de déflexion (50) est relié de manière rigide ou pivotante à l'élément de guidage d'air (40).18 160 370.5

4. Dispositif d'écoulement d'air (10) selon l'une des revendications 1 à 3, **caractérisé en ce que** les groupes de lamelles (30) opposés sont couplés entre eux par un axe commun.

5. Dispositif d'écoulement d'air (10) selon la revendication 4, **caractérisé en ce que** l'axe commun (36) est relié à une fourche (62) d'un élément de commande (60) ou à un élément de réglage disposé à l'extérieur du conduit d'air (14) pour le pivotement des lamelles (30).

6. Dispositif d'écoulement d'air (10) selon les revendications 1 à 5, **caractérisé en ce que** l'ouverture de sortie d'air (16) du dispositif d'écoulement d'air (10) dans la zone de sortie d'air présente un chanfrein (18).

7. Dispositif d'écoulement d'air (10) selon les revendications 1 à 6, **caractérisé en ce que** le dispositif d'écoulement d'air (10) présente plusieurs groupes de lamelles (30), les lamelles (30) étant disposées de manière circonférentielle.

8. Dispositif d'écoulement d'air (10) selon l'une des revendications 1 à 7, **caractérisé en ce que** le dispositif d'écoulement d'air (10) présente au moins une paire de rampes (22) qui sont situées sur des parois latérales opposées (20) dans le conduit d'air (14).

9. Dispositif d'écoulement d'air (10) selon les revendications 1 à 8, **caractérisé en ce que** au moins les parois de boîtier opposées (28) sont disposées de manière concentrique par rapport à l'élément de guidage d'air (40) et la distance entre cet élément de guidage d'air (40) et les parois de boîtier opposées (28) est pour l'essentiel égale.
